# EUROPEAN PATENT APPLICATION

(11) **EP 4 394 635 A1**
(43) Date of publication of application: **03.07.2024**
(21) Application number: 22874582.4
(22) Date of filing: 06.09.2022
(51) Int. Cl.: G06F 21/62, G06F 16/27, H04L 9/32, H04L 9/00, H04L 9/40, H04L 67/1097, G06F 21/64

(54) **DATA MANAGEMENT METHOD AND DEVICE**

(30) Priority: 28.09.2021 CN 202111142870
(71) Applicant: Huawei Technologies Co., Ltd., Shenzhen, Guangdong 518129 (CN)
(72) Inventor: ZHAO, Mingyu, Shenzhen, Guangdong 518129 (CN); YAN, Xueqiang, Shenzhen, Guangdong 518129 (CN); WU, Jianjun, Shenzhen, Guangdong 518129 (CN); YAN, Min, Shenzhen, Guangdong 518129 (CN)
(74) Representative: Gill Jennings & Every LLP
(86) International application number: PCT/CN2022/117246
(87) International publication number: WO 2023/051192

(57) **Abstract**

This application provides a data management method and apparatus. The method includes: A first data node sends first request information to a data storage node, where the first request information may include first authorization information, and the first authorization information comes from a private blockchain platform. The first data node may further receive second authorization information from the data storage node. In this application, a permission of the first data node may be verified by using the private blockchain platform, to prevent a node without the permission from storing data of the first data node in the data storage node or obtaining data of a second data node from the data storage node, where the second data node may be a smart home device, so that reliability of a data storage process of the smart home device is improved.

## Description

### CROSS-REFERENCE TO RELATED APPLICATIONS

This application claims priority to Chinese Patent Application No. 202111142870.9, filed with the China National Intellectual Property Administration on September 28, 2021 and entitled "DATA MANAGEMENT METHOD AND APPARATUS", which is incorporated herein by reference in its entirety.

### TECHNICAL FIELD

This application relates to the field of smart home technologies, and in particular, to a data management method and apparatus.

### BACKGROUND

As smart home products are increasingly popularized, data security issues and privacy breaches often occur in the smart home field. In addition, an internet of things terminal may be hijacked and maliciously accessed. For example, an electronic device, especially an image and video collection device like a camera in a smart home scenario, has a serious data security hazard due to a lack of a trusted access control mechanism.

Therefore, in the current smart home field, a user data storage solution is a hot topic of discussion. In an existing solution, user data is stored on a cloud or in a database provided by a network provider or a service provider. In this manner, the user data is stored in a public database. As a result, the user data may be obtained by a third party, and a security hazard exists.

### SUMMARY

This application provides a data management method and apparatus, to improve security of user data storage in the smart home field.

According to a first aspect, this application provides a data management method. The method may be performed by a first data node. The method may include: The first data node sends first request information to a data storage node, where the first request information may include first authorization information, and the first authorization information comes from a private blockchain platform. The first data node may further receive second authorization information from the data storage node. If the first request information is used to request to store data of the first data node in the data storage node, the first authorization information is used to verify whether the first data node is authorized to write the data of the first data node to the data storage node, and the second authorization information indicates that the first data node is allowed to write the data to the data storage node, the first data node sends to-be-stored data to the data storage node, where the data storage node and the first data node correspond to a same home. Alternatively, if the first request information is used to request data of a second data node, the first authorization information is used to verify whether the first data node is authorized to request the data of the second data node from the data storage node, and the second authorization information indicates that the first data node is allowed to request the data of the second data node from the data storage node, the first data node receives the data of the second data node sent by the data storage node, where the data storage node, the first data node, and the second data node correspond to a same home.

According to the foregoing method, a permission of the first data node may be verified by using the private blockchain platform, to prevent a node without the permission from storing the data of the first data node in the data storage node or obtaining the data of the second data node from the data storage node, where the second data node may be a smart home device, so that reliability of a data storage process of the smart home device is improved.

In a possible design, the first data node may send second request information to the private blockchain platform, where the second request information is used to request authorization for writing the data of the first data node to the data storage node, or the second request information is used to request authorization for requesting the data of the second data node from the data storage node. The first data node may further receive the first authorization information from the private blockchain platform.

In this design, the private blockchain platform can centrally authorizes write and read permissions. This further improves security.

In a possible design, if the first request information is used to request to store the data of the first data node in the data storage node, the first authorization information is used to verify whether the first data node is authorized to write the data to the data storage node, and the second authorization information indicates that the first data node is allowed to write the data to the data storage node, the first data node may further send a first indication to a digital twin corresponding to the first data node, where the first indication is used to notify that the data of the first data node is stored in the data storage node.

In this design, after writing the data to the data storage node, the first data node may notify the digital twin of the first data node to obtain the written data, to keep consistency between the data of the first data node and data of the digital twin of the first data node.

In a possible design, if the first request information is used to request the data of the second data node, the first authorization information is used to verify whether the first data node is authorized to request the data of the second data node from the data storage node, and the second authorization information indicates that the first data node is allowed to request the data of the second data node from the data storage node, the first data node sends the data of the second data node to a control node, where the data of the second data node is used by the control node to determine a smart contract, the smart contract indicates the control node to control a third data node to perform a third operation when the control node determines that a first condition is met, and the control node, the first data node, the second data node, and the third data node correspond to a same home.

In this design, the control node may determine the smart contract based on the data of the second data node, to implement smart control on the third data node according to the smart contract, so as to further improve an intelligence level of smart home control.

In a possible design, the first data node is a digital twin of the second data node.

According to a second aspect, this application provides a data management method. The method may be performed by a data storage node. The method may include: The data storage node receives first request information from a first data node, where the first request information includes first authorization information, and the first authorization information comes from a private blockchain platform. The data storage node may further send the first authorization information to the private blockchain platform. The data storage node may further receive third authorization information from the private blockchain platform. The data storage node may further send second authorization information to the first data node. If the first request information is used to request to store data of the first data node in the data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data to the data storage node, the data storage node receives to-be-stored data from the first data node, where the data storage node and the first data node correspond to a same home. Alternatively, if the first request information is used to request data of a second data node, the first authorization information is used to verify whether the first data node is authorized to request the data of the second data node from the data storage node, the third authorization information indicates that the first data node is authorized to request the data of the second data node from the data storage node, and the second authorization information indicates that the first data node is allowed to request the data of the second data node from the data storage node, the data storage node sends the data of the second data node to the first data node, where the data storage node, the first data node, and the second data node correspond to a same home.

In a possible design, if the first request information is used to request to store the data of the first data node in the data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data of the first data node to the data storage node, the data storage node performs a first operation, where the first operation includes storing the to-be-stored data. The data storage node may further send a first transaction record to the private blockchain platform, where the first transaction record is related to the first operation.

In a possible design, if the first request information is used to request the data of the second data node, the first authorization information is used to verify whether the first data node is authorized to request the data of the second data node from the data storage node, the third authorization information indicates that the first data node is authorized to request the data of the second data node from the data storage node, and the second authorization information indicates that the first data node is allowed to request the data of the second data node from the data storage node, the data storage node performs a second operation, where the second operation includes sending the data of the second data node to the first data node. The data storage node may further send a second transaction record to the private blockchain platform, where the second transaction record is related to the second operation.

According to a third aspect, this application provides a data management method. The method may be performed by a control node. The method may include: The control node receives data of a second data node from a first data node. The control node may further determine, based on the data of the second data node, that a first condition is met. The control node may further send a second indication to a third data node, where the second indication is used by the third data node to perform a third operation, and the control node, the first data node, the second data node, and the third data node correspond to a same home.

In a possible design, the control node may further obtain historical data of the second data node and historical data of the third data node. The control node determines a smart contract based on the historical data of the second data node and the historical data of the third data node, where the smart contract indicates the control node to control the third data node to perform the third operation when the control node determines, based on the historical data of the second data node, that the first condition is met.

In a possible design, the second data node includes at least one of a smart home device, a digital twin of the smart home device, an electronic device, or a digital twin of the electronic device.

According to a fourth aspect, this application provides a data management apparatus. The data management apparatus may be configured to implement functions implemented by a first terminal apparatus, the data storage node, or the control node in any one of the first aspect, the second aspect, the third aspect, and the possible designs of the first aspect, the second aspect, and the third aspect. The functions may be implemented by hardware, or may be implemented by hardware executing corresponding software. The hardware or the software includes one or more modules corresponding to the functions, method steps, or operations in the foregoing aspects and any designs of the foregoing aspects.

In a possible design, the data management apparatus may include a transceiver, a memory, and a processor. The transceiver is used by the data management apparatus to perform communication. The memory is configured to store a computer program. The processor is configured to run the computer program to implement the function of the first terminal apparatus, the data storage node, or the control node.

According to a fifth aspect, an embodiment of this application provides a computer-readable storage medium, including computer instructions. When the computer instructions are run on a computer, the computer is enabled to perform functions implemented by a first terminal apparatus, the data storage node, or the control node in any one of the first aspect, the second aspect, the third aspect, and the possible designs of the first aspect, the second aspect, and the third aspect.

According to a sixth aspect, an embodiment of this application provides a computer program product. When the computer program product runs on a computer, the computer is enabled to perform functions implemented by a first terminal apparatus, the data storage node, or the control node in any one of the first aspect, the second aspect, the third aspect, and the possible designs of the first aspect, the second aspect, and the third aspect.

According to a seventh aspect, an embodiment of this application provides a chip. The chip may be coupled to a memory, and may be configured to execute program instructions in the memory, to perform functions implemented by a first terminal apparatus, the data storage node, or the control node in any one of the first aspect, the second aspect, the third aspect, and the possible designs of the first aspect, the second aspect, and the third aspect. "Coupling" may mean that two components are directly or indirectly combined with each other. For example, coupling may mean that the two components are electrically connected.

For technical effects brought by the second aspect to the seventh aspect, refer to the description in the first aspect. Details are not described herein again.

### BRIEF DESCRIPTION OF DRAWINGS

FIG. 1 is a schematic diagram of an architecture of a smart home system according to this application;
FIG. 2 is a schematic diagram of a structure of a terminal according to this application;
FIG. 3 is a schematic diagram of an architecture of a data management system according to this application;
FIG. 4 is a schematic flowchart of a data management method according to this application;
FIG. 5 is a schematic diagram of a data write process according to this application;
FIG. 6 is a schematic diagram of a data read process according to this application;
FIG. 7 is a schematic diagram of a data read permission obtaining process according to this application;
FIG. 8 is a schematic flowchart of another data management method according to this application;
FIG. 9 is a schematic flowchart of another data management method according to this application;
FIG. 10 is a schematic diagram of a structure of a communication apparatus according to this application; and
FIG. 11 is a schematic diagram of a structure of another communication apparatus according to this application.

### DESCRIPTION OF EMBODIMENTS

To make objectives, technical solutions, and advantages of embodiments of this application clearer, the following describes the technical solutions in embodiments of this application in detail with reference to accompanying drawings and specific implementations of the specification.

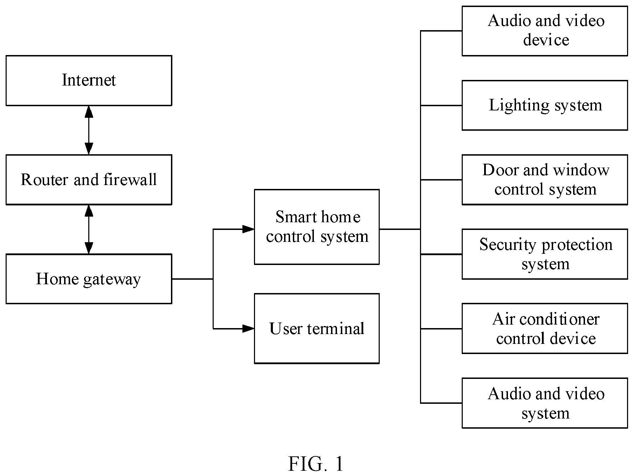

Some basic concepts in embodiments of this application are first described, to help a person skilled in the art have a better understanding.
1. A smart home uses a house as a platform, and household life related facilities are integrated by using an integrated cabling technology, a network communication technology, a security protection technology, an automatic control technology, and an audio and video technology, to construct an efficient management system for residential facilities and family schedule affairs, so as to improve safety, convenience, comfort, and artistry of home, and implement an environmental and energy-saving living environment. FIG. 1 is a schematic diagram in which a smart home control system is connected to various devices (which may be referred to as smart home devices). A smart home connects various devices (for example, an audio and video device, a lighting system, a door and window control system (including a door control device, a window control device, or a curtain control device), an air conditioner control device, a security protection system (for example, a monitoring and control device), or an audio and video system (for example, a digital theater system, an audio and video server, a movie cabinet system, or a network appliance)) in the home by using an internet of things technology, to provide various functions and means such as home appliance control, lighting control, telephone remote control, indoor and outdoor remote control, an anti-theft alarm, environmental monitoring, heating, ventilation, and air conditioning control, infrared forwarding, and programmable timing control.

In an existing manner, a user may control the various devices in the home by using a smart home application (application, app) installed on a user terminal (or a terminal for short). Therefore, after the user terminal accesses the smart home control system by using the smart home app, the user can control the various home devices in the home through the app.

Optionally, in addition to the scenario shown in FIG. 1, the user terminal (for example, a mobile phone, a tablet computer, or a portable terminal carried by the user) may also be one of the devices connected to the smart home control system. Alternatively, the smart home control system may be implemented by using the user terminal. In this case, the system may not include the smart home control system, and the user terminal and the smart home device are connected to a home gateway.
2. An electronic device is a device used to assist a user in selecting and controlling various smart home devices in a home, includes user terminals such as a smart home device (for example, a smart TV and a smart speaker) and a mobile phone used by a user, and may further include a third-party device like a router accessed by the home device.
3. A smart home device refers to various home devices applied to a smart home, for example, smart anti-theft line of products. The smart anti-theft line of products mainly trigger alarm information in a deployment state through coordination of various alarms and detectors, to implement security and anti-theft functions. The smart home device may alternatively be an intelligent lighting product. A user may easily view and control a switch status of a lighting device in the home by directly using a terminal like a mobile phone or a tablet computer. The smart home device may alternatively be a home appliance control product. A smart home appliance controller may associate infrared wireless signals, and control, through a terminal, any device that uses infrared remote control, for example, a TV, an air conditioner, or an electric curtain. In addition, the smart home device may alternatively be an air quality sensor. The user may conveniently view, on an app on a terminal, an indoor temperature and indoor humidity, and an environment monitored by the air quality sensor, and may work with another electrical device in the home to improve an indoor environment, to provide better experience for the user. The smart home device may alternatively be a mobile phone smart lock. The user only needs to take out a terminal like a mobile phone or a tablet computer, and enter a password to automatically unlock a door. In addition, the user may remotely unlock the door for family members or visitors.
4. A router is also referred to as a smart host or a home gateway, is a hardware device used to connect two or more networks, and functions as a gateway between networks. The router is a dedicated intelligent network device that reads an address of each data packet and determines how to transmit the data packet. Through a wireless connection to a host, the router can be easily controlled by a user by using a terminal like a mobile phone or a tablet computer. Generally, a router provides a Wi-Fi hotspot. Smart home devices and terminals access a Wi-Fi network by connecting to the Wi-Fi hotspot of the router. Routers connected to the smart home devices and terminals may be the same or different.
5. A smart home app is a software program that can select and control various home devices in a home, and is installed on a terminal used by a user. The smart home app mentioned below may be an application that has been installed on the terminal before delivery, or may be an application that is downloaded from a network or obtained from another device when the user uses the terminal.
6. A terminal refers to a device that can be used to control a smart home device in this application, for example, may be a portable device like a mobile phone, a tablet computer, an artificial intelligence (artificial intelligence, AI) smart voice terminal, a wearable device, an augmented reality (augmented reality, AR)/virtual reality (virtual reality, VR) device, or a processor configured to control the smart home device. The portable device includes but is not limited to a portable device equipped with iOS^{®}, Android^{®}, Microsoft^{®}, or another operating system. A user may control the smart home device in a home by using a smart home app installed on a terminal.

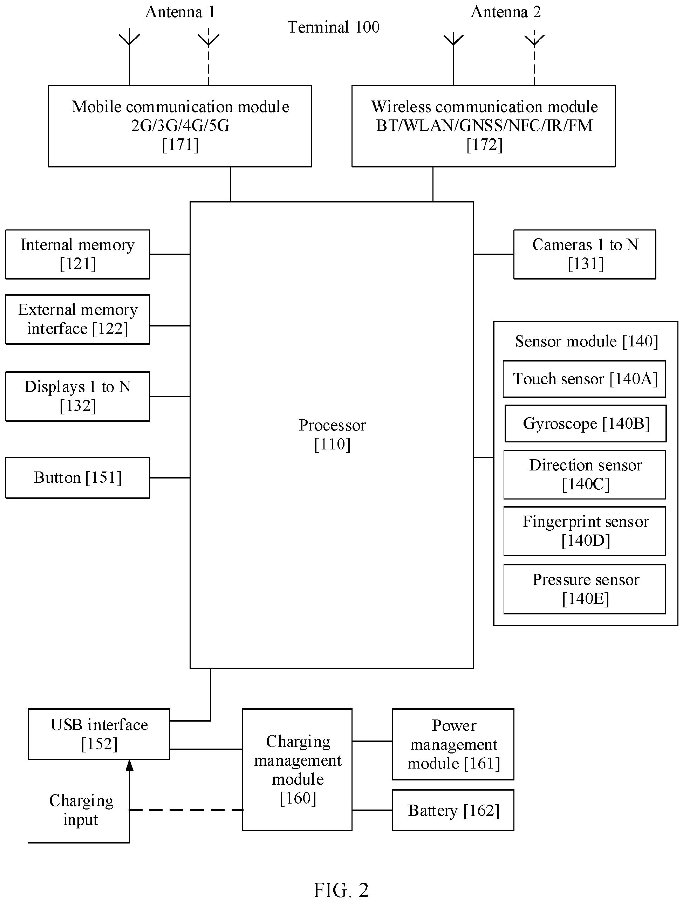

For example, FIG. 2 is a schematic diagram of a hardware structure of a terminal according to an embodiment of this application. Specifically, as shown in the figure, the terminal 100 includes a processor 110, an internal memory 121, an external memory interface 122, a camera 131, a display 132, a sensor module 140, a button 151, a universal serial bus (universal serial bus, USB) interface 152, a charging management module 160, a power management module 161, a battery 162, a mobile communication module 171, and a wireless communication module 172. In some other embodiments, the terminal 100 may further include a subscriber identification module (subscriber identification module, SIM) card interface, an audio module, a speaker, a receiver, a microphone, a headset jack, a motor, an indicator, a button, and the like.

It should be understood that the hardware structure shown in FIG. 2 is merely an example. The terminal 100 in this embodiment of this application may have more or fewer components than those of the terminal 100 shown in the figure, may combine two or more components, or may have a different component configuration. Various components shown in the figure may be implemented in hardware including one or more signal processing and/or application-specific integrated circuits, software, or a combination of hardware and software.

The processor 110 may include one or more processing units. For example, the processor 110 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

In some embodiments, a buffer may be further disposed in the processor 110, to store instructions and/or data. For example, the buffer in the processor 110 may be a cache. The buffer may be configured to store instructions and/or data just used, generated, or cyclically used by the processor 110. If the processor 110 needs to use the instructions or the data again, the processor 110 may directly invoke the instructions or the data from the buffer. This helps reduce time for the processor 110 to obtain the instructions or the data, and helps improve system efficiency.

The internal memory 121 may be configured to store a program and/or data. In some embodiments, the internal memory 121 includes a program storage area and a data storage area. The program storage area may be configured to store an operating system (for example, an operating system like Android or iOS), a computer program (for example, a voice wakeup function and a voice playing function) required by at least one function, and the like. The data storage area may be configured to store data (for example, audio data) created and/or collected when the terminal 100 is used. For example, the processor 110 may invoke the program and/or the data stored in the internal memory 121, so that the terminal 100 performs a corresponding method, to implement one or more functions. For example, the processor 110 invokes some programs and/or data in the internal memory, so that the terminal 100 performs the voice wakeup method provided in embodiments of this application, to implement a voice wakeup function. The internal memory 121 may be a high-speed random access memory, a nonvolatile memory, and/or the like. For example, the nonvolatile memory may include at least one of one or more magnetic disk storage devices, flash memory devices, and/or universal flash storages (universal flash storages, UFSs).

The external memory interface 122 may be configured to connect to an external storage card (for example, a micro SD card), to extend a storage capacity of the terminal 100. The external storage card communicates with the processor 110 through the external memory interface 122, to implement a data storage function. For example, the terminal 100 may store files such as images, music, and videos in the external storage card through the external memory interface 122.

The camera 131 may be configured to capture dynamic and static images and the like. Generally, the camera 131 includes a lens and an image sensor. An object is projected onto the image sensor by using an optical image generated by the lens, and then the optical image is converted into an electrical signal for subsequent processing. For example, the image sensor may be a charge-coupled device (charge-coupled device, CCD) or a complementary metal-oxide-semiconductor (complementary metal-oxide-semiconductor, CMOS) photoelectric transistor. The image sensor converts an optical signal into an electrical signal, and then transmits the electrical signal to the ISP, to convert the electrical signal into a digital image signal. It should be noted that the terminal 100 may include one or N cameras 131, where N is a positive integer greater than 1.

The display 132 may include a display panel, configured to display a user interface. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. It should be noted that the terminal 100 may include one or M displays 132, where M is a positive integer greater than 1. For example, the terminal 100 may implement a display function by using the GPU, the display 132, the application processor, and the like. In this embodiment of the present invention, the terminal 100 may display a user interface of the smart home app, for example, a home screen of the smart home app, or a control interface of a smart home device, by using the display 132. Details are described below.

For example, the terminal is a mobile phone, and the sensor module 140 may include one or more sensors, for example, a touch sensor 140A, a gyroscope 140B, a direction sensor 140C, a fingerprint sensor 140D, and a pressure sensor 140E. In some embodiments, the sensor module 140 may further include an ambient light sensor, a distance sensor, a proximity sensor, a bone conduction sensor, a temperature sensor, and the like.

The button 151 may include a power button, a volume button, and the like. The button 151 may be a mechanical button or a touch button. The terminal 100 may receive a button input, and generate a button signal input related to user setting and function control of the terminal 100.

The USB interface 152 is an interface conforming to a USB standard specification, and may be specifically a mini USB interface, a micro USB interface, a USB Type-C interface, or the like. The USB interface 152 may be configured to connect to a charger to charge the terminal 100, or may be configured to transfer data between the terminal 100 and a peripheral device, or may be configured to connect to a headset for playing an audio through the headset. For example, in addition to being a headset jack, the USB interface 152 may be further configured to connect to another device, for example, an AR device or a computer.

The charging management module 160 is configured to receive a charging input from the charger. The charger may be a wireless charger or a wired charger. In some embodiments of wired charging, the charging management module 160 may receive a charging input of a wired charger through the USB interface 152. In some embodiments of wireless charging, the charging management module 160 may receive a wireless charging input through a wireless charging coil of the terminal 100. When charging the battery 162, the charging management module 160 may further supply power to the terminal 100 through the power management module 161.

The power management module 161 is configured to connect to the battery 162, the charging management module 160, and the processor 110. The power management module 161 receives an input from the battery 162 and/or the charging management module 160, and supplies power to the processor 110, the internal memory 121, the display 132, the camera 131, and the like. The power management module 161 may be further configured to monitor parameters such as a battery capacity, a battery cycle count, and a battery health status (leakage or impedance). In some other embodiments, the power management module 161 may alternatively be disposed in the processor 110. In some other embodiments, the power management module 161 and the charging management module 160 may alternatively be disposed in a same component.

The mobile communication module 171 may provide a wireless communication solution that is applied to the terminal 100 and that includes 2G/3G/4G/5G or the like. The mobile communication module 171 may include a filter, a switch, a power amplifier, a low noise amplifier (low noise amplifier, LNA), and the like. The mobile communication module 171 may receive an electromagnetic wave signal through the antenna 1, perform processing such as filtering and amplification on the received electromagnetic wave signal, and transmit the electromagnetic wave signal to the modem processor for demodulation. The mobile communication module 171 may further amplify a signal modulated by the modem processor, and convert the signal into an electromagnetic wave for radiation through the antenna 1. In some embodiments, at least some functional modules of the mobile communication module 171 may be disposed in the processor 110. In some embodiments, at least some functional modules of the mobile communication module 171 may be disposed in a same component as at least some modules of the processor 110. For example, the mobile communication module 171 may send a voice to another device, or may receive a voice sent by another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker, the receiver, or the like), or displays an image or a video by using the display 132. In some embodiments, the modem processor may be an independent component. In some other embodiments, the modem processor may be independent of the processor 110, and is disposed in a same component as the mobile communication module 171 or another functional module.

The wireless communication module 172 may provide a solution that is applied to the terminal 100 and that includes wireless communication like a WLAN (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 172 may be one or more components integrating at least one communication processing module. The wireless communication module 172 receives an electromagnetic wave through the antenna 2, performs frequency modulation and filtering processing on an electromagnetic wave signal, and sends a processed signal to the processor 110. The wireless communication module 172 may further receive a to-be-sent signal from the processor 110, perform frequency modulation and amplification on the signal, and convert the signal into an electromagnetic wave for radiation through the antenna 2. In some embodiments, the terminal 100 may access the Wi-Fi network by connecting to a router through the wireless communication module 172.

In some embodiments, in the terminal 100, the antenna 1 is coupled to the mobile communication module 171, and the antenna 2 is coupled to the wireless communication module 172, so that the terminal 100 can communicate with another device. Specifically, the mobile communication module 171 may communicate with another device through the antenna 1, and the wireless communication module 172 may communicate with another device through the antenna 2. The wireless communication technology may include a global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In this embodiment of this application, the terminal 100 may alternatively be connected to the smart home device and/or the smart home control system in a wireless signal transmission manner through the mobile communication module 171 or the wireless communication module 172. For example, the terminal 100 sends an input operation in a wireless signal form to the smart home device through the mobile communication module 171 or the wireless communication module 172. Alternatively, the terminal 100 receives, through the mobile communication module 171 or the wireless communication module 172, status data that is in the wireless signal form and that is sent by the smart home device. Specific content is described below.

Optionally, the smart home device and/or the user terminal in this application may have a structure shown in FIG. 2.

It may be understood that an interface connection relationship between the modules shown in this embodiment of this application is merely an example for description, and constitutes no limitation on the structure of the terminal 100. In some other embodiments of this application, the terminal 100 may alternatively use an interface connection manner different from that in the foregoing embodiment, or a combination of a plurality of interface connection manners. It should be understood that the hardware structure shown in FIG. 2 is merely an example. The terminal in this embodiment of this application may have more or fewer components than those shown in the figure, may combine two or more components, or may have different component configurations. Various components shown in the figure may be implemented in hardware including one or more signal processing and/or application-specific integrated circuits, software, or a combination of hardware and software.

The following describes in detail a smart home device selection method in embodiments of this application by using the terminal shown in FIG. 2 as an example and with reference to the accompanying drawings. In the following, a plurality of in embodiments of this application means two or more than two. It should be noted that in the descriptions of embodiments of this application, terms such as "first" and "second" are merely intended for distinction in description, but should not be construed as indicating or implying relative importance or indicating or implying a sequence.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects.

Reference to "one embodiment" or "some embodiments" described in this specification means that a specific characteristic, structure or feature described in combination with this embodiment is included in one or more embodiments of this application. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "contain", "have", and variations thereof all mean "include but are not limited to", unless otherwise specifically emphasized in another manner.

In the smart home system shown in FIG. 1, historical data generated by the smart home device is stored on a cloud through an internet or stored in a database provided by a network provider or a service provider, and historical data of a user is centrally stored on the cloud or in the database provided by the network provider or the service provider. As a result, user data may be obtained by a third party other than the user, the network provider, or the service provider, and a huge privacy leakage hazard exists.

Embodiments of this application provide a data management method and apparatus, to optimize a user data storage solution in the smart home field, and improve user data storage security.

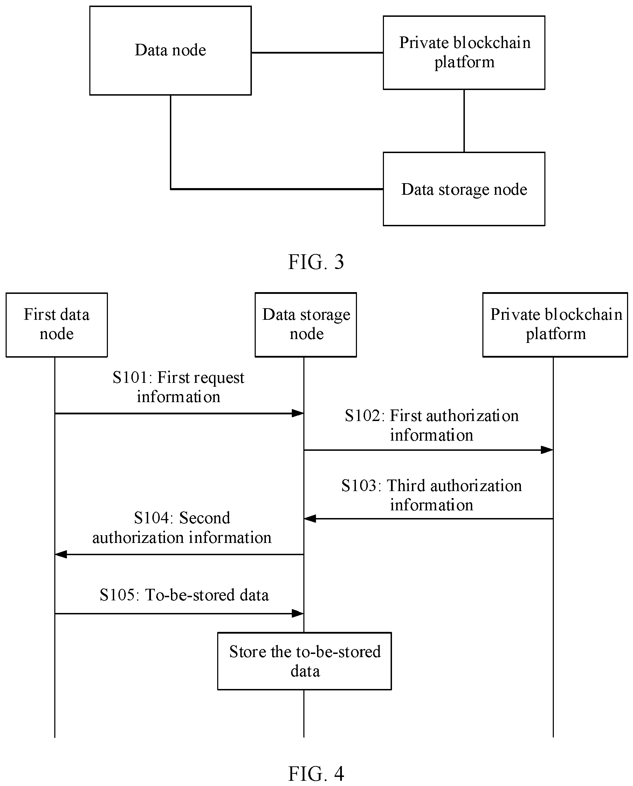

As shown in FIG. 3, an embodiment of this application provides a data management system. The system may include a data node, a private blockchain (blockchain, BC) platform, and a data storage (data storage, DS) node.

Optionally, the data management system corresponds to a same gateway device, or the data management system is deployed in a same home range, and is configured to control smart home devices in the same home range. That is, the private blockchain may be deployed in the home range, to avoid data leakage.

For example, the private blockchain may use a user terminal or the like as a primary node to implement access control on the smart home device, perform authentication, authorization, access control (authentication, authorization, access control, AAA) and storage management on data of the smart home device or the like, and perform on-chain on an access record of the device and an operation record of the device on the data, that is, upload the access record and the operation record to the private blockchain, where confirmation is collectively performed by full nodes and the like in the private blockchain, that is, a consensus is reached by the private blockchain by using a consensus mechanism. In addition, a smart contract (smart contract, SC) can be deployed on the private blockchain. Nodes such as the smart home devices and the user terminal in the home range may be authorized by joining the private blockchain, and become nodes on the private blockchain. The nodes on the private blockchain may be classified into full nodes, lightweight nodes, and common users based on computing and storage capabilities. Only a device that is registered on the chain can access a storage device in the private blockchain.

The nodes on the private blockchain form the private blockchain platform. In this application, the private blockchain platform may be configured to authorize data read and write permissions. Only a device with an authorized write permission can store data in the data storage node, and/or only a device with an authorized read permission can read data from the data storage node. The private blockchain platform may be specifically configured to execute AAA, set a node type, and the like, and may be further configured to perform on-chain on registration and access records of the private blockchain. It should be understood that the private blockchain platform in this application may be implemented by one or more nodes on the private blockchain.

Optionally, in addition to the system shown in FIG. 3, the data storage node may be a node on the private blockchain, in other words, the data storage node belongs to the private blockchain platform. If the data storage node is a node on the private blockchain, the data storage node may be a storage device on the private blockchain. The storage device may be used as a full node. The storage device may be configured to locally store data, and may be configured to perform on-chain on an operation record of the device on the data. The data storage node may be a node with a strong storage capability on the private blockchain, for example, a home gateway or a mobile phone.

In this application, the data node may be configured to initiate a data control request, and the data control request is, for example, a data storage or read request. Optionally, the data node may include a smart home device, user equipment, a digital twin of the smart home device, or a digital twin of the user equipment. A digital twin is a simulation process that integrates multi-discipline, multi-physical quantity, multi-scale, and multi-probability by fully utilizing data like a physical model, sensor update, and a running history, and completes mapping in a virtual space. As an intelligent agent of a physical entity in the virtual space, the digital twin has intelligent capabilities, and can interact with the digital twin or another physical entity and virtual entity. For example, the private blockchain may include a digital twin of the smart home device and/or a digital twin of the user terminal.

Optionally, the data node may further include a digital twin of a user. The digital twin of the user may obtain and analyze behavior data of the smart home device and/or the user terminal, predict behavior of the user, generate a new smart contract based on a prediction result, and control the smart home device and/or the user terminal based on the new smart contract, to improve intelligence of smart home control. For example, the digital twin of the user may obtain parameters and historical data such as work arrival/departure times of the user or a season, to automatically control an air conditioner, turn on/off a light, and the like. The digital twin of the user may be connected to the digital twin of the smart home device and/or the digital twin of the user terminal.

In this application, the digital twin may be implemented in a software and/or hardware manner. If the digital twin is implemented in a software manner, the digital twin may include independent storage and computing resources. For example, the digital twin of the user equipment implements a function of the user equipment by using storage and computing resources.

The data management method provided in embodiments of this application may be used to store and read data of a smart home device and/or a user terminal, to improve reliability of historical data storage, and may be used to control the smart home device and/or the user terminal based on the read data of the smart home device and/or the user terminal, to improve intelligent of smart home control. The data management method provided in embodiments of this application may be implemented by using a control node (which may also be referred to as an integrated management and control platform in this application). The control node may be a node on a private blockchain. For example, the control node may be implemented by at least one of a data storage node, a smart home control system, the user terminal, the smart home device, a home gateway, a router, or a firewall. For example, a private blockchain platform may include a node with the strongest computing and storage capabilities on the private blockchain. It should be understood that the control node may alternatively be another node with a control function on the private blockchain. This is not specifically limited in this application. The data storage node and the control node may be deployed on a same node on the private blockchain.

The following describes the data management method provided in embodiments of this application with reference to the accompanying drawings.

In the following, an example in which the method is executed by a first data node, a data storage node, and a private blockchain platform is used for description. The first data node is configured to request to write (or store) data to the data storage node. The first data node may be a node on a private blockchain.

As shown in FIG. 4, in a data storage process, the method provided in embodiments of this application may include the following steps.

S101: The first data node sends first request information to the data storage node, where the first request information may include first authorization information, and the first authorization information comes from the private blockchain platform.

The first request information may be used to request to store the data of the first data node in the data storage node.

Correspondingly, the data storage node receives the first request information.

S102: The data storage node sends the first authorization information to the private blockchain platform, to request the private blockchain platform to verify whether the first data node is authorized to write the data to the data storage node.

Correspondingly, the private blockchain platform receives the first authorization information.

S103: The private blockchain platform sends third authorization information to the data storage node, where the third authorization information may indicate that the first data node is authorized to write the data to the data storage node.

The private blockchain platform may verify, based on the first authorization information, that the first data node is authorized to write the data to the data storage node, and send the third authorization information.

Correspondingly, the data storage node receives the third authorization information.

S104: The data storage node sends second authorization information to the first data node, where the second authorization information indicates that the first data node is allowed to write the data to the data storage node.

Correspondingly, the first data node receives the second authorization information.

S 105: The first data node sends to-be-stored data to the data storage node.

Correspondingly, the data storage node receives the to-be-stored data from the first data node.

According to the procedure shown in FIG. 4, a permission of the first data node may be verified by using the private blockchain platform, to prevent a node without a write permission from storing the data in the data storage node, so that reliability of a data storage process of a smart home device is improved.

Optionally, after the data storage node receives the to-be-stored data, the data storage node may further perform a first operation. The first operation includes but is not limited to storing the to-be-stored data. For example, the data storage node may locally store the to-be-stored data. Further, the data storage node may further perform on-chain on a transaction record (which may be referred to as a first transaction record) corresponding to the first operation. The first transaction record may include an identifier (or other information indicating an identity of the first data node) of the first data node, a transaction type (for example, indicating that the first operation is a write operation), a user data pointer (used to search for the data) stored in the first operation, a data access policy corresponding to the data, a digital signature (or referred to as a signature) of the first data node, or the like. The data access policy corresponding to the data may be used to determine whether reading of the data is allowed. For example, the data access policy corresponding to the data may indicate which nodes are allowed or not allowed to access the data written this time. The first transaction record may be queried by a node on the private blockchain.

After S105, the first data node may further send a first indication to a digital twin of the first data node, to notify that the data of the first data node is stored in the data storage node, so that the digital twin updates historical data of the first data node. The data of the first data node may be obtained through the digital twin when needed.

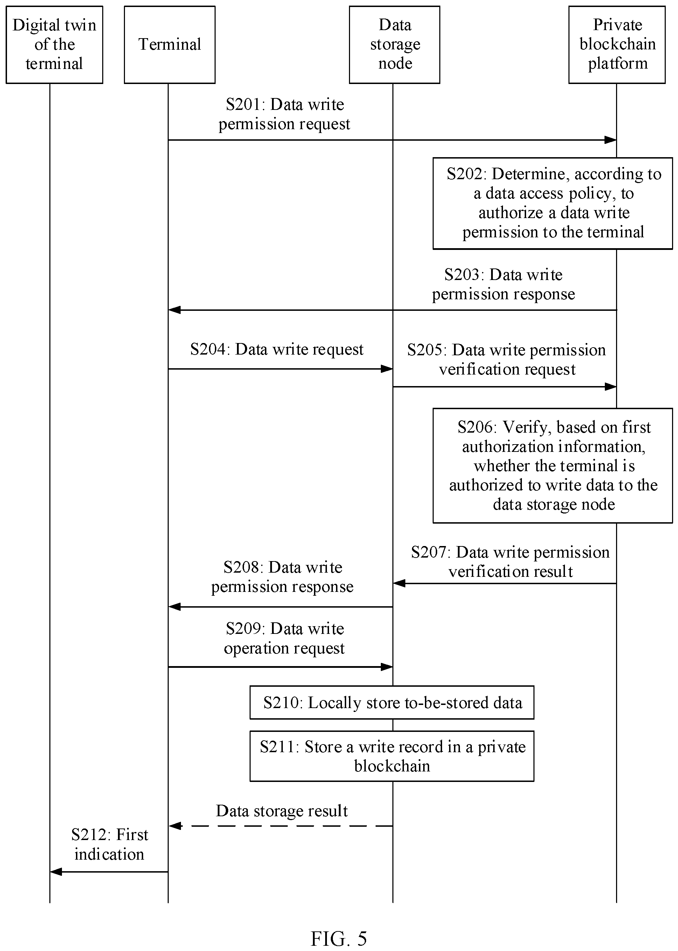

Before S101, the first data node may request a data write permission from the private blockchain platform, to obtain the first authorization information. In this case, the first data node may be referred to as a data generator or a data generation node. For example, the first data node is a terminal. For a process in which the terminal requests a data write permission from the private blockchain platform and writes data after obtaining the data write permission, refer to FIG. 5.

S201: A terminal sends a data write permission request (or referred to as second request information) to a private blockchain platform, to request authorization for writing data to a data storage node. The terminal may be a smart home device and/or a user terminal.

For example, the data write permission request is an access permission request (access permission request).

Correspondingly, the private blockchain platform receives the data write permission request.

S202: The private blockchain platform determines, according to a data access policy, to authorize a data write permission to the terminal. In other words, the private blockchain platform determines, according to the data access policy, to allow the terminal to write data to the data storage node.

The data access policy is used to determine which devices are allowed to write and/or read data to the data storage node. For example, the data access policy may include a subject condition. For example, if the data access policy requires that only a node on a private blockchain can write and/or read data to the data storage node, the private blockchain platform may identify, based on an identifier or another identity message of the terminal, whether the terminal is a node on the private blockchain.

Optionally, update, revocation, and authorization of the data access policy need to be implemented by using a policy management transaction.

S203: The private blockchain platform sends a data write permission response to the terminal, where the data write permission response carries first authorization information, to indicate that the terminal is allowed to write data to the data storage node.

For example, the data write permission response may be an access permission response (access permission response), and the first authorization information may be an access proof of permission (proof of permission, PoP).

Correspondingly, the terminal receives the write permission response.

Optionally, in this application, the terminal and a digital twin of the terminal may obtain the data write permission with reference to steps shown in S201 to S203. The terminal and the digital twin of the terminal may send the data write permission request and obtain the data write permission when joining the private blockchain (for example, registering with the private blockchain), and then update the data write permission periodically and/or when a specific condition is met. If the terminal has obtained the first authorization information, S201 to S203 may be skipped, and S204 is performed.

S204: The terminal sends a data write request (namely, first request information) to the data storage node, where the data write request carries the first authorization information.

Correspondingly, the data storage node receives the data write request.

S205: The data storage node sends a data write permission verification request to the private blockchain platform, where the data write permission verification request carries the first authorization information, to request the private blockchain platform to verify whether the terminal is authorized to write the data to the data storage node.

For example, the data write permission verification request is carried in an access permission validate (access permission validate) message.

Correspondingly, the private blockchain platform receives the data write permission verification request.

S206: The private blockchain platform verifies, based on the first authorization information, whether the terminal is authorized to write the data to the data storage node.

Optionally, if the private blockchain platform determines that the first authorization information is consistent with the first authorization information sent to the terminal in S203, it is verified that the terminal is authorized to write the data to the data storage node. Otherwise, if the private blockchain platform determines that the first authorization information is inconsistent with any previously sent first authorization information, it is verified that the terminal is not authorized to write the data to the data storage node, and the private blockchain platform may discard the first authorization information, or send a data write permission verification result to the data storage node, where the data write permission verification result carries an indication indicating that the terminal is not authorized to write the data to the data storage node.

S207: After it is verified that the terminal is authorized to write the data to the data storage node, the private blockchain platform sends the data write permission verification result to the data storage node, where the data write permission verification result carries third authorization information, to indicate that the terminal is authorized to write the data to the data storage node.

For example, the data write permission verification result is access permission validation (access permission validation) information.

Correspondingly, the data storage node receives the data write permission verification result.

S208: The data storage node sends a data write permission response to the terminal, where the data write permission response carries second authorization information, to indicate that the terminal is allowed to write the data to the data storage node.

Correspondingly, the terminal receives the data write permission response.

S209: The terminal sends a data write operation request to the data storage node, where the data write operation request carries to-be-stored data, to request to store the to-be-stored data.

Correspondingly, the data storage node receives the data write operation request.

S210: The data storage node locally stores the to-be-stored data.

S211: The data storage node stores a current write record (that is, a first transaction record) in the private blockchain.

For example, the data storage node may send the write record to the private blockchain platform, and the private blockchain platform stores the write record in the private blockchain.

Optionally, after S211, the data storage node may send a data storage result, for example, an acknowledge character (acknowledge character, ACK), to the terminal.

Correspondingly, the terminal receives the data storage result.

S212: The terminal sends a first indication to the digital twin of the terminal, to notify that the data of the terminal is updated.

Optionally, the terminal may perform S212 after receiving the data storage result, or the terminal may perform S212 after S209, and does not need to wait for receiving the data storage result.

Correspondingly, the digital twin of the terminal receives the first indication, and learns that the data of the terminal is updated. Then, the digital twin may obtain, by using a data read procedure, the data of the terminal stored in the data storage node.

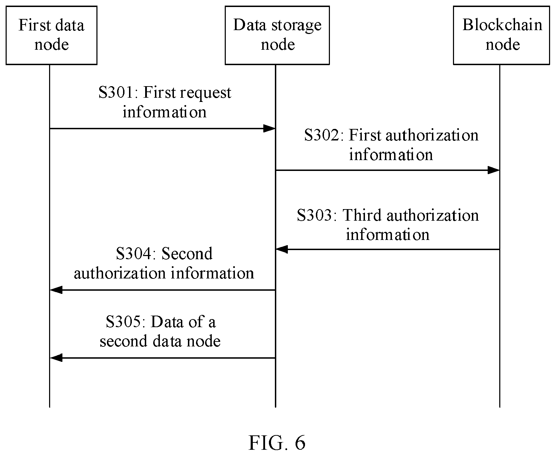

The data management method provided in embodiments of this application further includes a data read (or obtaining) procedure. In FIG. 6, an example in which the method is executed by a first data node, a second data node, a data storage node, and a private blockchain platform is used for description. The first data node is configured to request to read data of the second data node from the data storage node, where the data of the second data node may be historical data or current data of the second data node. The first data node and/or the second data node may be nodes on a private blockchain. The first data node and the second data node may be a same device or different devices, for example, the first data node is a digital twin of the second data node, or the first data node and the second data node are a same device, or the first data node is a digital twin of a user.

As shown in FIG. 6, in a data read procedure, the method provided in embodiments of this application may include the following steps.

S301: The first data node sends first request information to the data storage node, where the first request information may include first authorization information, and the first authorization information comes from the private blockchain platform.

The first request information may be used to request the data of the second data node. For example, second request information may include an identifier or other identity information of the second data node.

Correspondingly, the data storage node receives the first request information.

S302: The data storage node sends the first authorization information to the private blockchain platform, to request the private blockchain platform to verify whether the first data node is authorized to request the data from the data storage node.

Correspondingly, the private blockchain platform receives the first authorization information.

S303: The private blockchain platform sends third authorization information to the data storage node, where the third authorization information may indicate that the first data node is authorized to request the data from the data storage node.

The private blockchain platform may verify, based on the first authorization information, that the first data node is authorized to request the data from the data storage node, and send the third authorization information.

Correspondingly, the data storage node receives the third authorization information.

S304: The data storage node sends second authorization information to the first data node, where the second authorization information indicates that the first data node is allowed to request the data from the data storage node.

Correspondingly, the first data node receives the second authorization information.

S305: The data storage node sends the data of the second data node to the first data node.

Correspondingly, the first data node receives the data of the second data node from the data storage node.

According to the procedure shown in FIG. 6, a permission of the first data node may be verified by using the private blockchain platform, to prevent a node without a write permission from obtaining the data of the second data node from the data storage node. This improves reliability of a data read process of the smart home device, and avoids data leakage.

Optionally, the data storage node may further perform a second operation, where the second operation includes but is not limited to reading and sending the data of the second data node to the first data node. Further, optionally, the data storage node may further perform on-chain on a transaction record (which may be referred to as a second transaction record) corresponding to the second operation. The second transaction record may include an identifier (or other information indicating an identity of the first data node) of the first data node, a transaction type (for example, indicating that the second operation is a read operation), a user data pointer read in the second operation, a digital signature of the first data node, or the like. The second transaction record may be queried by a node on the private blockchain.

Before S301, the first data node may request a data read permission from the private blockchain platform, to obtain the first authorization information, so as to obtain the data of the second data node from the data storage node based on the first authorization information.

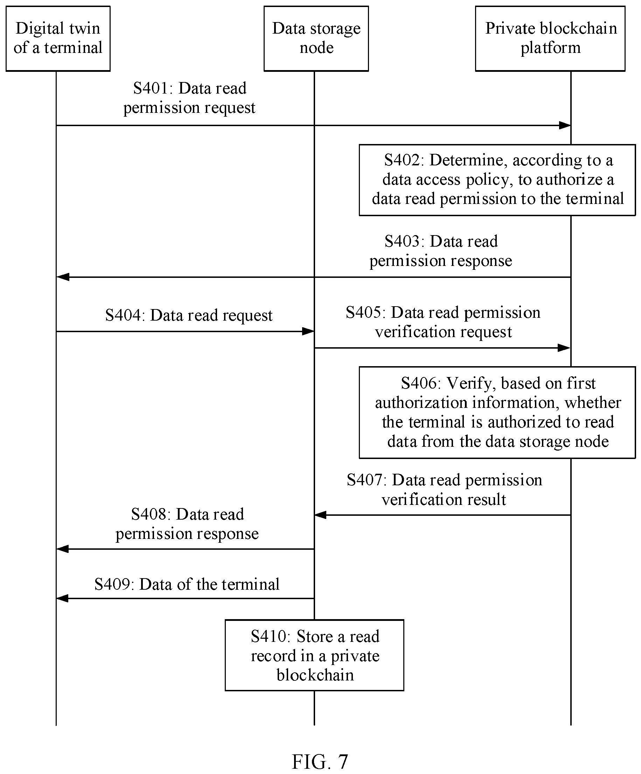

Refer to FIG. 7. For example, a first data node is a digital twin of a terminal, and a second data node is the terminal. A process in which the terminal requests a data read permission from a private blockchain platform and reads data after obtaining the data read permission may include the following steps.

S401: The digital twin of the terminal sends a data read permission request (or referred to as second request information) to the private blockchain platform, to request authorization for reading data from a data storage node. The terminal may be a smart home device and/or a user terminal. For example, the data read permission request is an access permission request.

Optionally, before S401, the digital twin of the terminal may receive a first indication from the terminal, where the first indication indicates that data of the terminal is stored in the data storage node. Therefore, the digital twin may perform S401 to initiate a process of obtaining the data of the terminal from the data storage node. For the first indication, refer to the description in S202. For a process of storing the data of the terminal in the data storage node, refer to the description of the data storage process shown in FIG. 4 and/or FIG. 5. Details are not described herein again.

Correspondingly, the private blockchain platform receives the data read permission request.

S402: The private blockchain platform determines, according to a data access policy, to authorize a data read permission to the digital twin. In other words, the private blockchain platform determines, according to the data access policy, to allow the digital twin to read the data from the data storage node. For the data access policy, refer to the description in S202.

S403: The private blockchain platform sends a data read permission response to the digital twin, where the data read permission response carries first authorization information, to indicate that the digital twin is allowed to read the data from the data storage node.

For example, the data read permission response may be an access permission response, and the first authorization information may be a PoP.

Correspondingly, the digital twin receives the read permission response.

Optionally, in this application, the terminal and the digital twin of the terminal may obtain the data read permission with reference to steps shown in S401 to S403. The terminal and the digital twin of the terminal may send the data read permission request and obtain the data read permission when joining the private blockchain (for example, registering with the private blockchain), and then update the data read permission periodically and/or when a specific condition is met. If the terminal has obtained the first authorization information, S401 to S403 may be skipped, and S404 is performed.

S404: The digital twin sends a data read request to the data storage node, to request to obtain the data of the terminal, where the data read request carries the first authorization information.

For example, the data read request is a data access request (data access request). The data read request may further carry information of to-be-read data, for example, information such as an identifier of the terminal and/or a generation time of the to-be-read data, to request to read the data.

Correspondingly, the data storage node receives the data read request.

S405: The data storage node sends a data read permission verification request to the private blockchain platform, where the data read permission verification request carries the first authorization information, to request the private blockchain platform to verify whether the digital twin is authorized to read the data from the data storage node.

For example, the data read permission verification request is carried in an access permission validate message.

Correspondingly, the private blockchain platform receives the data read permission verification request.

S406: The private blockchain platform verifies, based on the first authorization information, whether the digital twin is authorized to read the data from the data storage node.

Optionally, if the private blockchain platform determines that the first authorization information is consistent with the first authorization information sent to the digital twin in S403, it is verified that the digital twin is authorized to read the data from the data storage node. Otherwise, if the private blockchain platform determines that the first authorization information is inconsistent with the first authorization information sent to the digital twin in S403, or determines that the first authorization information is inconsistent with any previously sent first authorization information, it is verified that the digital twin is not authorized to read the data from the data storage node, and the private blockchain platform may discard the first authorization information, or send a data read permission verification result to the data storage node, where the data read permission verification result carries an indication indicating that the digital twin is not authorized to read the data from the data storage node.

S407: After it is verified that the digital twin is authorized to read the data from the data storage node, the private blockchain platform sends the data read permission verification result to the data storage node, where the data read permission verification result carries third authorization information, to indicate that the digital twin is authorized to read the data from the data storage node.

For example, the data read permission verification result is access permission validation information.

Correspondingly, the data storage node receives the data read permission verification result.

S408: The data storage node sends a data read permission response to the digital twin, where the data read permission response carries second authorization information, to indicate that the digital twin is allowed to read the data from the data storage node.

Optionally, if the private blockchain stores a write record of the data, and the write record includes the data access policy corresponding to the data, the data storage node may send the second authorization information to the digital twin when a read condition allowed by the data access policy corresponding to the data is met.

Correspondingly, the digital twin receives the data read permission response.

S409: The data storage node sends the data of the terminal to the digital twin.

Correspondingly, the digital twin receives the data from the data storage node.

S410: The data storage node stores a current read record (that is, a second transaction record) in the private blockchain.

For example, the data storage node may send the read record to the private blockchain platform, and the private blockchain platform stores the read record in the private blockchain.

Because in the smart home system shown in FIG. 1, the user cannot obtain the data from the database provided by the network provider or the service provider, the smart home device cannot be controlled based on the user data. In addition, currently, a process of controlling the smart home device is performed by the user by using an app in a user terminal, and a decision is made by the user in a control process. Therefore, the smart home device cannot be controlled based on historical data of the user. In the procedure shown in FIG. 7, the digital twin of the terminal can obtain the data of the terminal, for example, historical data of the terminal, from the data storage node. This makes it possible for the system to predict behavior of the user based on the data of the terminal. Therefore, the smart home device can be controlled based on a prediction result of the behavior of the user. This improves flexibility of smart home device control and implements more intelligent smart home control.

Embodiments of this application further provide another data management method, to flexibly use data of a smart home device and a user terminal, and implement more intelligent control. The method may be implemented by a control node, a first data node, and a third data node. The first data node and the third data node may be smart home devices or user terminals. The control node is, for example, a digital twin of a user, and may be used to predict behavior of the user, or may be another node like the user terminal. For example, the control node may determine, based on a time at which a lighting system and/or an air conditioner are/is turned on on a workday, a work departure time of the user, and turn on the lighting system and/or the air conditioner on the workday based on the time.

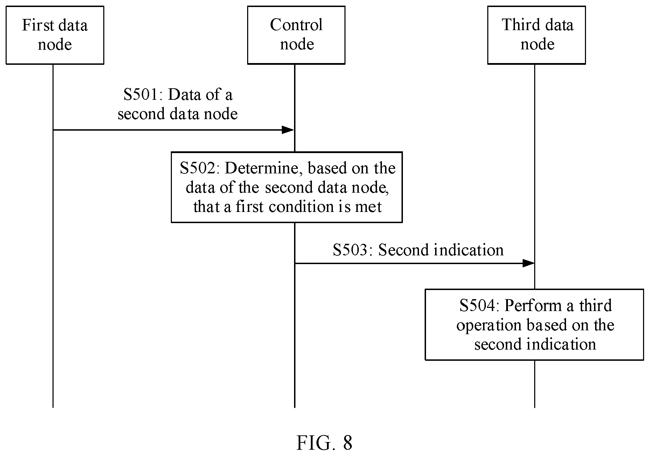

As shown in FIG. 8, for example, the method is executed by the control node, and the method may include the following steps.

S501: The control node receives data of a second data node from the first data node.

The first data node may be a smart home device, a user terminal, a digital twin of the smart home device, or a digital twin of the user terminal. The second data node may be a smart home device or a user terminal, and the first data node may be the same as or different from the second data node. Optionally, the first data node may obtain the data of the second data node from a data storage node according to the method shown in FIG. 6 or FIG. 7, and/or the second data node may store the data in the data storage node according to the method shown in FIG. 4 or FIG. 5.

For example, the control node may send data request information to the first data node, to request the data of the second data node. Alternatively, the first data node may send the data of the second data node to the control node based on a specified condition. For example, the first data node may send the data of the second data node after a specified time arrives, a specified period is met, or a specified event (for example, a temperature and humidity each reach a specified value) is met.

It should be understood that a quantity of first data nodes and a quantity of second data nodes are not limited in this application. In other words, in S101, at least one first data node may send, to the control node, data of at least one second data node obtained by the at least one first data node.

S502: The control node determines, based on the data of the second data node, that a first condition is met.

For example, a third condition is a threshold condition corresponding to the data of the second data node. When the data of the second data node meets the threshold condition, the control node determines that the first condition is met.

For example, the second data node is a temperature and humidity sensor. The data of the second data node may be a current temperature. If the current temperature reaches 30 degrees, it is determined that the first condition is met.

S503: The control node sends a second indication to the third data node, where the second indication is used by the third data node to perform a third operation.

It should be understood that S502 and S503 may be implemented by using a smart contract. For example, the smart contract may indicate the control node to send the second indication to the third data node after determining, based on the data of the second data node, that the first condition is met.

Correspondingly, the third data node receives the second indication.

S504: The third data node performs a third operation based on the second indication.

For example, if the smart contract indicates that a current temperature detected by the temperature and humidity sensor reaches 30°C, the air conditioner is turned on, and a cooling mode is started. In other words, the first condition is that the current temperature detected by the temperature and humidity sensor reaches 30°C, and the third operation is that the air conditioner starts cooling. After determining, based on data of the temperature and humidity sensor, that the current temperature reaches 30°C, the control node may control, by using the second indication, the air conditioner to start cooling.

In this application, the smart contract may be preset or generated by the control node.

In a possible example, the control node may determine the smart contract based on historical data of the second data node and historical data of the third data node. For example, the control node analyzes the historical data of the second data node and the historical data of the third data node. If it is found that when the historical data of the second data node meets the first condition, the user controls the third data node to perform the third operation, the smart contract is generated, to automatically trigger the third data node to perform the third operation when the first condition is met, and the third data node does not need to be controlled by the user to perform the third operation, so that more intelligent home control can be implemented. Optionally, the control node may store the smart contract in a private blockchain.

In this application, historical data of a terminal may be stored in the data storage node. Optionally, the first data node may obtain the historical data of the terminal by using the method shown in FIG. 6 or FIG. 7. In addition, the terminal may store the historical data in the data storage node by using the procedure shown in FIG. 4 or FIG. 5.

For example, according to the method shown in FIG. 7, each digital twin may obtain historical data of a terminal corresponding to the digital twin. The historical data herein includes scenario data like a temperature and humidity, user behavior data, and the like. Further, the control node may obtain the historical data from the digital twin of each terminal, and predict, based on the historical data, behavior of controlling the smart home device by the user.

In this application, the scenario data may be used to determine the first condition, and the user behavior data may be used to determine the third operation that needs to be performed when the first condition is met. Optionally, the scenario data may include temperature and humidity information, a time, a weather, a season, and/or a position of the user terminal. The behavior data may include an operation performed by the user on the smart home device and/or the user terminal.

It should be understood that, the digital twin may obtain the data of the terminal and send the data of the terminal to the control node by using the procedure shown in FIG. 8. Alternatively, the control node may obtain the data of the terminal from the data storage node. For a method for obtaining the data of the terminal by the control node, refer to the method for obtaining the data of the terminal by the digital twin of the terminal. Details are not described again.

The following describes a possible implementation of the procedure shown in FIG. 8 by using an example.

In a possible example, the smart contract indicates to turn on the air conditioner when the following condition (namely, the first condition) is met: First, a temperature and season condition: A temperature detected by the temperature and humidity sensor reaches a temperature threshold corresponding to a season (for example, in summer, a threshold is above 30 degrees; and in winter, a threshold is below 10 degrees). Second, a work departure distance condition and/or work departure time condition: The work departure distance condition is, for example, a distance between a position of the user terminal and a home is less than a specific distance threshold, for example, 200 meters. The work departure time condition is, for example, a daily work departure (or home arrival) time of the user collected by the user terminal arrives.

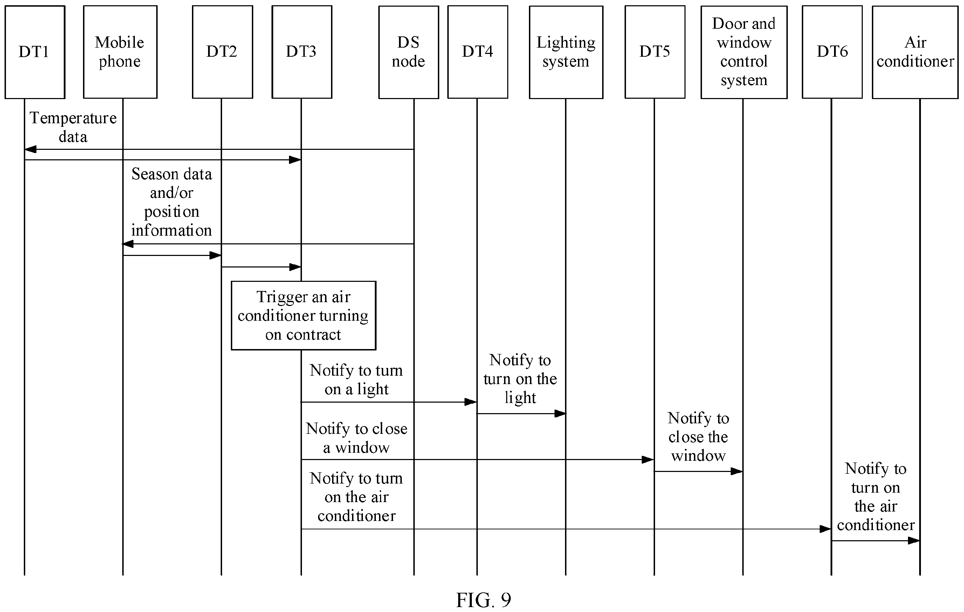

As shown in FIG. 9, for example, the control node is a digital twin DT3 of the user, and the user terminal is a mobile phone. In the foregoing execution of the smart contract, the temperature and humidity sensor collects an indoor temperature in real time, and a digital twin DT1 of the temperature and humidity sensor obtains indoor temperature data through the data storage node (represented as a DS node in FIG. 9). The temperature data may be stored in the data storage node by the temperature and humidity sensor by using the method shown in FIG. 4 or FIG. 5, and the DT1 may read the temperature data from the data storage node by using the method shown in FIG. 6 or FIG. 7. If a temperature in summer is higher than the threshold, the DT1 sends a message to the DT3 to report that the temperature and season condition is met. The season may be obtained as follows: A digital twin DT2 of the mobile phone obtains data of the mobile phone, and the DT2 determines a season and indicates the season to the DT1. Similarly, the DT2 may obtain, from the data storage node, position information collected by the mobile phone of the user. When the DT2 determines that a distance between a position of the mobile phone of the user and the home is less than the distance threshold, the DT2 sends a message to the DT3 to report that the work departure distance condition is met, or sends the position information to the DT3. The DT3 may compare a current time with the daily work departure time of the user, to determine whether the work departure time condition is met. When the digital twin of the user determines that both the temperature and season condition and the work departure distance condition and/or work departure time condition are met, the digital twin of the user triggers an air conditioner turning on contract in the smart contract, further controls a door and window control system to close a window, determines, based on the current time and a sunset time, whether a light needs to be turned on, and turns on the air conditioner.

Optionally, when the smart contract is triggered, the DT3 uniformly controls execution of the following actions: notifying a digital twin DT4 of the lighting system, where the DT4 indicates the lighting system to turn on the light; notifying a digital twin DT5 of the door and window control system, where the DT5 indicates the door and window control system to close the window; and notifying a digital twin DT6 of the air conditioner, where the DT6 indicates the air conditioner to turn on and sets the air conditioner at a preset temperature. Specifically, in an implementation, the DT3 may send the second indication to a smart home device by using a corresponding digital twin, to indicate the smart home device to perform a response action. For example, the DT3 may send the second indication to the lighting system by using the DT4, to indicate the lighting system to turn on the light.

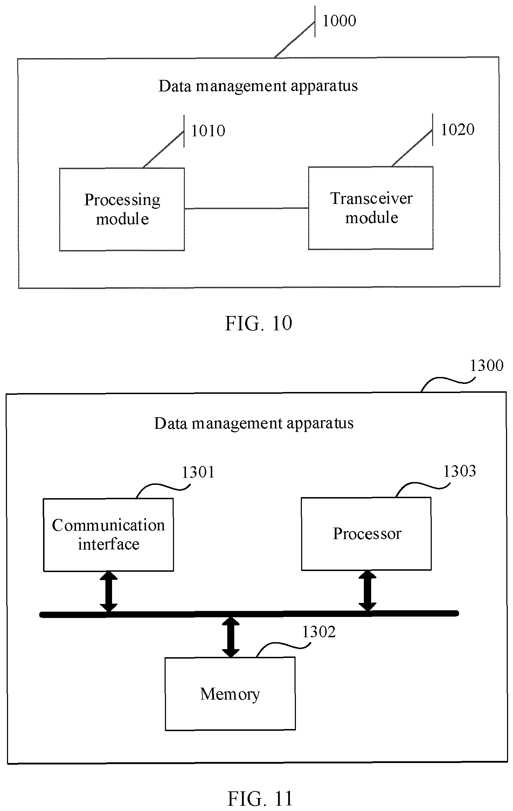

The foregoing describes the data management method provided in embodiments of this application with reference to FIG. 1 to FIG. 8. The following describes the data management apparatus provided in embodiments of this application with reference to FIG. 10 and FIG. 11. The apparatus described herein may be configured to perform the data management method provided in embodiments of this application. The apparatus may also be referred to as a communication apparatus or the like. This is not specifically limited. It may be understood that, to implement the foregoing functions, the apparatus described below may include corresponding hardware structures and/or software modules for performing the functions. A person skilled in the art should be easily aware that, in combination with units and algorithm steps of the examples described in embodiments disclosed in this specification, this application can be implemented by hardware, computer software, or a combination of hardware and computer software. Whether a function is performed by hardware or hardware driven by computer software depends on particular applications and design constraints of the technical solutions.

As shown in FIG. 10, an embodiment of this application provides a data management apparatus 1000. For example, the data management apparatus 1000 may be configured to perform steps performed by the first data node, the data storage node, or the control node in the data management method provided in embodiments of this application.

For example, FIG. 10 is a schematic diagram of a structure of a possible data management apparatus. The structure may include a processing module (or a processing unit) 1010 and a transceiver module (or a transceiver unit) 1020. For example, the structure shown in FIG. 10 may be a first data node, a data storage node, or a control node, or may be a chip, a device, a component (or referred to as an assembly), or the like applied to the first data node, the data storage node, or the control node. When the structure is the first data node, the data storage node, or the control node, the transceiver module 1020 may be a transceiver. The transceiver may include a communication interface, an antenna, a radio frequency circuit, or the like, to support the apparatus in performing communication in a wired and/or wireless manner. The processing module 1010 may be a processor, for example, includes one or more central processing units (central processing units, CPUs). When the structure is a component having a function of the first data node, the data storage node, or the control node shown in this application, the transceiver module 1020 may be an interface circuit, and the processing module 1010 may be a processor. When the structure is a chip system, the transceiver module 1020 may be an input/output interface of a chip (for example, a baseband chip), and the processing module 1010 may be a processor of the chip system, and may include one or more central processing units. It should be understood that, in this embodiment of this application, the processing module 1010 may be implemented as a processor or a processor-related circuit component, and the transceiver module 1020 may be implemented as a transceiver or a transceiver-related circuit component.

For example, the processing module 1010 may be configured to perform all operations, except sending and receiving operations, performed by the first data node, the data storage node, or the control node in any embodiment of this application, for example, a processing operation, and/or another process used to support the technology described in this specification, for example, generating a message, information, and/or signaling sent by the transceiver module 1020, and processing a message, information, and/or signaling received by the transceiver module 1020. The transceiver module 1020 may be configured to perform all receiving and sending operations performed by the first data node, the data storage node, or the control node in any embodiment of this application, and/or another process used to support the technology described in this specification, for example, data sending and/or receiving.

In addition, the transceiver module 1020 may be a functional module, and the functional module can complete both a sending operation and a receiving operation. For example, the transceiver module 1020 may be configured to perform all sending and receiving operations performed by the first data node, the data storage node, or the control node. For example, when the sending operation is performed, it may be considered that the transceiver module 1020 is a sending module, and when the receiving operation is performed, it may be considered that the transceiver module 1020 is a receiving module. Alternatively, the transceiver module 1020 may be two functional modules, and the transceiver module 1020 may be considered as a general name of the two functional modules. The two functional modules are a sending module and a receiving module respectively. The sending module is configured to complete a sending operation. For example, the sending module may be configured to perform all sending operations performed by the first data node, the data storage node, or the control node. The receiving module is configured to complete a receiving operation, and the receiving module may be configured to perform all receiving operations performed by the first data node, the data storage node, or the control node.

For example, when performing the step performed by the first data node, the transceiver module 1020 may be configured to send first request information to the data storage node, where the first request information may include first authorization information, and the first authorization information comes from a private blockchain platform. The transceiver module 1020 may be further configured to receive second authorization information from the data storage node. If the first request information is used to request to store data of the first data node in the data storage node, the first authorization information is used to verify whether the first data node is authorized to write the data of the first data node to the data storage node, and the second authorization information indicates that the first data node is allowed to write the data to the data storage node, the first data node sends to-be-stored data to the data storage node, where the data storage node and the first data node correspond to a same home. Alternatively, if the first request information is used to request data of a second data node, the first authorization information is used to verify whether the first data node is authorized to request the data of the second data node from the data storage node, and the second authorization information indicates that the first data node is allowed to request the data of the second data node from the data storage node, the first data node receives the data of the second data node sent by the data storage node, where the data storage node, the first data node, and the second data node correspond to a same home.

In a possible design, the transceiver module 1020 may further send second request information to the private blockchain platform, where the second request information is used to request authorization for writing the data of the first data node to the data storage node, or the second request information is used to request authorization for requesting the data of the second data node from the data storage node. The first data node may further receive the first authorization information from the private blockchain platform.

In a possible design, if the first request information is used to request to store the data of the first data node in the data storage node, the first authorization information is used to verify whether the first data node is authorized to write the data to the data storage node, and the second authorization information indicates that the first data node is allowed to write the data to the data storage node, the transceiver module 1020 may further send a first indication to a digital twin corresponding to the first data node, where the first indication is used to notify that the data of the first data node is stored in the data storage node.

In a possible design, if the first request information is used to request the data of the second data node, the first authorization information is used to verify whether the first data node is authorized to request the data of the second data node from the data storage node, and the second authorization information indicates that the first data node is allowed to request the data of the second data node from the data storage node, the transceiver module 1020 may be further configured to send the data of the second data node to a control node, where the data of the second data node is used by the control node to determine a smart contract, the smart contract indicates the control node to control a third data node to perform a third operation when the control node determines that a first condition is met, and the control node, the first data node, the second data node, and the third data node correspond to a same home.

When performing the step performed by the data storage node, the transceiver module 1020 may be configured to receive the first request information from the first data node, where the first request information includes the first authorization information, and the first authorization information comes from the private blockchain platform. The data storage node may further send the first authorization information to the private blockchain platform. The transceiver module 1020 may be further configured to receive third authorization information from the private blockchain platform, and may be further configured to send the second authorization information to the first data node. If the first request information is used to request to store the data of the first data node in the data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data to the data storage node, the data storage node receives the to-be-stored data from the first data node, where the data storage node and the first data node correspond to the same home. Alternatively, if the first request information is used to request the data of the second data node, the first authorization information is used to verify whether the first data node is authorized to request the data of the second data node from the data storage node, the third authorization information indicates that the first data node is authorized to request the data of the second data node from the data storage node, and the second authorization information indicates that the first data node is allowed to request the data of the second data node from the data storage node, the data storage node sends the data of the second data node to the first data node, where the data storage node, the first data node, and the second data node correspond to the same home.

In a possible design, if the first request information is used to request to store the data of the first data node in the data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data of the first data node to the data storage node, the processing module 1010 performs a first operation, where the first operation includes storing the to-be-stored data. The transceiver module 1020 may further send a first transaction record to the private blockchain platform, where the first transaction record is related to the first operation.

In a possible design, if the first request information is used to request the data of the second data node, the first authorization information is used to verify whether the first data node is authorized to request the data of the second data node from the data storage node, the third authorization information indicates that the first data node is authorized to request the data of the second data node from the data storage node, and the second authorization information indicates that the first data node is allowed to request the data of the second data node from the data storage node, the processing module 1010 performs a second operation, where the second operation includes sending the data of the second data node to the first data node. The transceiver module 1020 may further send a second transaction record to the private blockchain platform, where the second transaction record is related to the second operation.

When performing the step performed by the data storage node, the transceiver module 1020 may be configured to receive the data of the second data node from the first data node. The processing module 1010 may be further configured to determine, based on the data of the second data node, that the first condition is met. The transceiver module 1020 may further send the second indication to the third data node, where the second indication is used by the third data node to perform the third operation, and the control node, the first data node, the second data node, and the third data node correspond to the same home.

In a possible design, the transceiver module 1020 may further obtain historical data of the second data node and historical data of the third data node. The processing module 1010 may be further configured to determine the smart contract based on the historical data of the second data node and the historical data of the third data node, where the smart contract indicates the control node to control the third data node to perform the third operation when the control node determines, based on the historical data of the second data node, that the first condition is met.

As shown in FIG. 11, an embodiment of this application provides a data management apparatus 1300. For example, the data management apparatus 1300 may be configured to perform steps performed by the first data node, the data storage node, or the control node in the data management method provided in embodiments of this application.

For ease of understanding, FIG. 11 shows only a structure required for performing the method shown in this application, and no limitation is imposed on that the apparatus may have more components in this application. The data management apparatus 1300 may include a communication interface 1301, a memory 1302, and a processor 1303. The communication interface 1301 may be used by the data management apparatus to perform communication, for example, send or receive a signal in a wired and/or wireless manner, to send and/or receive information, data, a message, and the like. The memory 1302 is coupled to the processor 1303, and is configured to store a program and data that are required for implementing functions of the data management apparatus 1300. The processor 1303 is configured to support the data management apparatus 1300 in performing a processing function performed by the first data node, the data storage node, or the control node in the foregoing method, for example, determining to generate information and a message sent by the communication interface 1301, and/or demodulating and decoding a signal received by the communication interface 1301. The memory 1302 and the processor 1303 may be integrated or may be independent of each other.

For example, the communication interface 1301 may include a wired communication interface, and may be configured to support the data management apparatus 1300 in receiving and sending signaling and/or data in a wired manner. The communication interface 1301 may also be referred to as a transceiver unit or a communication unit, and may be considered as a combination of a receiving unit and a sending unit. Alternatively, the communication interface 1301 may include a wireless transceiver (for example, include a modem and/or an antenna), and may be configured to support the data management apparatus 1300 in receiving and sending signaling and/or data in a wireless manner. The communication interface 1301 may also be referred to as a wireless transceiver or a wireless communication unit. The communication interface 1301 may also include a wired transceiver or a wired interface. The processor 1303 may be implemented by using a processing chip or a processing circuit.

For example, the communication interface 1301 may be configured to implement the foregoing actions of the transceiver module 1020, and the processor 1303 may be configured to implement the foregoing actions of the processing module 1010. For details, refer to the foregoing description. Details are not described herein again.

All or some of the foregoing embodiments may be implemented by using software, hardware (for example, a circuit), firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Embodiments of the present invention is described with reference to the flowcharts and/or block diagrams of the method, the device (system), and the computer program product according to embodiments of the present invention. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of the present invention without departing from the spirit and scope of this application. In this way, this application is intended to cover these modifications and variations provided that the modifications and variations of embodiments of the present invention fall within the scope defined by the following claims and their equivalent technologies in this application.

## Claims

1. A data management method, comprising:
sending, by a first data node, first request information to a data storage node, wherein the first request information comprises first authorization information, and the first authorization information comes from a private blockchain platform;
receiving, by the first data node, second authorization information from the data storage node; and
if the first request information is used to request to store data of the first data node in the data storage node, the first authorization information is used to verify whether the first data node is authorized to write the data of the first data node to the data storage node, and the second authorization information indicates that the first data node is allowed to write the data to the data storage node, sending, by the first data node, to-be-stored data to the data storage node, wherein the data storage node and the first data node correspond to a same home; or
if the first request information is used to request data of a second data node, the first authorization information is used to verify whether the first data node is authorized to request the data of the second data node from the data storage node, and the second authorization information indicates that the first data node is allowed to request the data of the second data node from the data storage node, receiving, by the first data node, the data of the second data node sent by the data storage node, wherein the data storage node, the first data node, and the second data node correspond to a same home.

2. The method according to claim 1, further comprising:
sending, by the first data node, second request information to the private blockchain platform, wherein the second request information is used to request authorization for writing the data of the first data node to the data storage node, or the second request information is used to request authorization for requesting the data of the second data node from the data storage node; and
receiving, by the first data node, the first authorization information from the private blockchain platform.

3. The method according to claim 1 or 2, wherein if the first request information is used to request to store the data of the first data node in the data storage node, the first authorization information is used to verify whether the first data node is authorized to write the data to the data storage node, and the second authorization information indicates that the first data node is allowed to write the data to the data storage node, the method further comprises:
sending, by the first data node, a first indication to a digital twin corresponding to the first data node, wherein the first indication is used to notify that the data of the first data node is stored in the data storage node.

4. The method according to claim 1 or 2, wherein if the first request information is used to request the data of the second data node, the first authorization information is used to verify whether the first data node is authorized to request the data of the second data node from the data storage node, and the second authorization information indicates that the first data node is allowed to request the data of the second data node from the data storage node, the method further comprises:
sending, by the first data node, the data of the second data node to a control node, wherein the data of the second data node is used by the control node to determine a smart contract, the smart contract indicates the control node to control a third data node to perform a third operation when the control node determines that a first condition is met, and the control node, the first data node, the second data node, and the third data node correspond to a same home.

5. The method according to claim 4, wherein the first data node is a digital twin of the second data node.

6. A data management method, comprising:
receiving, by a data storage node, first request information from a first data node, wherein the first request information comprises first authorization information, and the first authorization information comes from a private blockchain platform;
sending, by the data storage node, the first authorization information to the private blockchain platform;
receiving, by the data storage node, third authorization information from the private blockchain platform;
sending, by the data storage node, second authorization information to the first data node; and
if the first request information is used to request to store data of the first data node in the data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data to the data storage node, receiving, by the data storage node, to-be-stored data from the first data node, wherein the data storage node and the first data node correspond to a same home; or
if the first request information is used to request data of a second data node, the first authorization information is used to verify whether the first data node is authorized to request the data of the second data node from the data storage node, the third authorization information indicates that the first data node is authorized to request the data of the second data node from the data storage node, and the second authorization information indicates that the first data node is allowed to request the data of the second data node from the data storage node, sending, by the data storage node, the data of the second data node to the first data node, wherein the data storage node, the first data node, and the second data node correspond to a same home.

7. The method according to claim 6, wherein if the first request information is used to request to store the data of the first data node in the data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data of the first data node to the data storage node, the method further comprises:
performing, by the data storage node, a first operation, wherein the first operation comprises storing the to-be-stored data; and
sending, by the data storage node, a first transaction record to the private blockchain platform, wherein the first transaction record is related to the first operation.

8. The method according to claim 6, wherein if the first request information is used to request the data of the second data node, the first authorization information is used to verify whether the first data node is authorized to request the data of the second data node from the data storage node, the third authorization information indicates that the first data node is authorized to request the data of the second data node from the data storage node, and the second authorization information indicates that the first data node is allowed to request the data of the second data node from the data storage node, the method further comprises:
performing, by the data storage node, a second operation, wherein the second operation comprises sending the data of the second data node to the first data node; and
sending, by the data storage node, a second transaction record to the private blockchain platform, wherein the second transaction record is related to the second operation.

9. A data management method, comprising:
receiving, by a control node, data of a second data node from a first data node;
determining, by the control node based on the data of the second data node, that a first condition is met; and
sending, by the control node, a second indication to a third data node, wherein the second indication is used by the third data node to perform a third operation, and the control node, the first data node, the second data node, and the third data node correspond to a same home.

10. The method according to claim 9, further comprising:
obtaining, by the control node, historical data of the second data node and historical data of the third data node; and
determining, by the control node, a smart contract based on the historical data of the second data node and the historical data of the third data node, wherein the smart contract indicates the control node to control the third data node to perform the third operation when the control node determines, based on the historical data of the second data node, that the first condition is met.

11. The method according to claim 9, wherein the second data node comprises at least one of the following:
a smart home device, a digital twin of the smart home device, an electronic device, or a digital twin of the electronic device.

12. A data management apparatus, comprising a sending module and a receiving module, wherein
the sending module is configured to send first request information to a data storage node, wherein the first request information comprises first authorization information, and the first authorization information comes from a private blockchain platform;
the receiving module is configured to receive second authorization information from the data storage node; and
if the first request information is used to request to store data of a first data node in the data storage node, the first authorization information is used to verify whether the first data node is authorized to write the data of the first data node to the data storage node, and the second authorization information indicates that the first data node is allowed to write the data to the data storage node, the sending module is further configured to send to-be-stored data to the data storage node, wherein the data storage node and the first data node correspond to a same home; or
if the first request information is used to request data of a second data node, the first authorization information is used to verify whether the first data node is authorized to request the data of the second data node from the data storage node, and the second authorization information indicates that the first data node is allowed to request the data of the second data node from the data storage node, the receiving module is further configured to receive the data of the second data node sent by the data storage node, wherein the data storage node, the first data node, and the second data node correspond to a same home.

13. The apparatus according to claim 12, wherein the sending module is further configured to:
send second request information to the private blockchain platform, wherein the second request information is used to request authorization for writing the data of the first data node to the data storage node, or the second request information is used to request authorization for requesting the data of the second data node from the data storage node; and
the receiving module is further configured to:
receive the first authorization information from the private blockchain platform.

14. The apparatus according to claim 12 or 13, wherein if the first request information is used to request to store the data of the first data node in the data storage node, the first authorization information is used to verify whether the first data node is authorized to write the data to the data storage node, and the second authorization information indicates that the first data node is allowed to write the data to the data storage node, the sending module is further configured to:
send a first indication to a digital twin corresponding to the first data node, wherein the first indication is used to notify that the data of the first data node is stored in the data storage node.

15. The apparatus according to claim 12 or 13, wherein if the first request information is used to request the data of the second data node, the first authorization information is used to verify whether the first data node is authorized to request the data of the second data node from the data storage node, and the second authorization information indicates that the first data node is allowed to request the data of the second data node from the data storage node, the sending module is further configured to:
send the data of the second data node to a control node, wherein the data of the second data node is used by the control node to determine a smart contract, the smart contract indicates the control node to control a third data node to perform a third operation when the control node determines that a first condition is met, and the control node, the first data node, the second data node, and the third data node correspond to a same home.

16. The apparatus according to claim 15, wherein the first data node is a digital twin of the second data node.

17. A data management apparatus, comprising a sending module and a receiving module, wherein
the receiving module is configured to receive first request information from a first data node, wherein the first request information comprises first authorization information, and the first authorization information comes from a private blockchain platform;
the sending module is configured to send the first authorization information to the private blockchain platform;
the receiving module is further configured to receive third authorization information from the private blockchain platform;
the sending module is further configured to send second authorization information to the first data node; and
if the first request information is used to request to store data of the first data node in a data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data to the data storage node, the receiving module is further configured to receive to-be-stored data from the first data node, wherein the data storage node and the first data node correspond to a same home; or
if the first request information is used to request data of a second data node, the first authorization information is used to verify whether the first data node is authorized to request the data of the second data node from a data storage node, the third authorization information indicates that the first data node is authorized to request the data of the second data node from the data storage node, and the second authorization information indicates that the first data node is allowed to request the data of the second data node from the data storage node, the sending module is further configured to send the data of the second data node to the first data node, wherein the data storage node, the first data node, and the second data node correspond to a same home.

18. The apparatus according to claim 17, wherein if the first request information is used to request to store the data of the first data node in the data storage node, the first authorization information is used to verify whether the first data node is authorized to write the data of the first data node to the data storage node, the third authorization information indicates that the first data node is authorized to write the data of the first data node to the data storage node, and the second authorization information indicates that the first data node is allowed to write the data of the first data node to the data storage node, the apparatus further comprises a processing module, wherein
the processing module is configured to perform a first operation, wherein the first operation comprises storing the to-be-stored data; and
the sending module is further configured to:
send a first transaction record to the private blockchain platform, wherein the first transaction record is related to the first operation.

19. The apparatus according to claim 17, wherein if the first request information is used to request the data of the second data node, the first authorization information is used to verify whether the first data node is authorized to request the data of the second data node from the data storage node, the third authorization information indicates that the first data node is authorized to request the data of the second data node from the data storage node, and the second authorization information indicates that the first data node is allowed to request the data of the second data node from the data storage node, the apparatus further comprises a processing module, wherein
the processing module is configured to perform a second operation, wherein the second operation comprises sending the data of the second data node to the first data node; and
the sending module is further configured to:
send a second transaction record to the private blockchain platform, wherein the second transaction record is related to the second operation.

20. A data management apparatus, comprising a transceiver module and a processing module, wherein
the transceiver module is configured to receive data of a second data node from a first data node;
the processing module is configured to determine, based on the data of the second data node, that a first condition is met; and
the transceiver module is further configured to send a second indication to a third data node, wherein the second indication is used by the third data node to perform a third operation, and the control node, the first data node, the second data node, and the third data node correspond to a same home.

21. The apparatus according to claim 20, wherein the processing module is further configured to:
obtain historical data of the second data node and historical data of the third data node; and
determine a smart contract based on the historical data of the second data node and the historical data of the third data node, wherein the smart contract indicates the control node to control the third data node to perform the third operation when the control node determines, based on the historical data of the second data node, that the first condition is met.

22. The apparatus according to claim 20, wherein the second data node comprises at least one of the following:
a smart home device, a digital twin of the smart home device, an electronic device, or a digital twin of the electronic device.

23. A communication apparatus, comprising a processor, wherein
the processor is configured to run a computer program stored in a memory, so that the communication apparatus performs the method according to any one of claims 1 to 5.

24. The communication apparatus according to claim 23, further comprising a transceiver and/or the memory, wherein
the transceiver is used by the apparatus to perform communication.

25. A communication apparatus, comprising a processor, wherein
the processor is configured to run a computer program stored in a memory, so that the communication apparatus performs the method according to any one of claims 6 to 8.

26. The communication apparatus according to claim 25, further comprising a transceiver and/or the memory, wherein
the transceiver is used by the apparatus to perform communication.

27. A communication apparatus, comprising a processor, wherein
the processor is configured to run a computer program stored in a memory, so that the communication apparatus performs the method according to any one of claims 9 to 11.

28. The communication apparatus according to claim 27, further comprising a transceiver and/or the memory, wherein
the transceiver is used by the apparatus to perform communication.

29. A computer-readable storage medium, wherein the computer-readable storage medium is configured to store a computer program, and when the computer program is run on a computer, the computer is enabled to perform the method according to any one of claims 1 to 11.

30. A computer program product, wherein when the computer program product runs on a computer, the computer is enabled to perform the method according to any one of claims 1 to 11.

31. A communication system, comprising a communication apparatus configured to perform the method according to any one of claims 1 to 5, a communication apparatus configured to perform the method according to any one of claims 6 to 8, and a communication apparatus configured to perform the method according to any one of claims 9 to 11.

32. A communication apparatus, comprising a module configured to perform the method according to any one of claims 1 to 11.

33. A chip system, wherein the chip system comprises a logic circuit and an input/output interface, wherein
the input/output interface is configured to communicate with a communication apparatus outside the chip system, and the logic circuit is configured to perform the method according to any one of claims 1 to 11.
